# EUROPÄISCHE PATENTSCHRIFT

(11) **EP 0 477 713 B1**
(45) Veröffentlichungstag und Bekanntmachung des Hinweises auf die Patenterteilung: **04.05.1994**
(21) Anmeldenummer: 91115684.2
(22) Anmeldetag: 16.09.1991
(51) Int. Cl.: F16B 9/02, F16B 9/00

(54) **Vorrichtung zur Befestigung eines insbesondere rohrförmigen Bauteils an einer Wand oder dergleichen**
Device for fastening a tubular member to a wall or the like
Dispositif pour fixer notamment une pièce de construction tubulaire à une paroi ou un élément similaire

(30) Priorität: 27.09.1990 DD 344254
(43) Veröffentlichungstag der Anmeldung: 01.04.1992
(73) Patentinhaber: HEWI Heinrich Wilke GmbH, D-34454 Arolsen (DE)
(72) Erfinder: Dziuk, Richard, W-3548 Arolsen (DE); Wulfert, Karl-Ludwig, W-3544 Waldeck (DE); Jäger, Horst, W-3593 Edertal-Buhlen (DE)
(74) Vertreter: Freiherr von Schorlemer, Reinfried, Dipl.-Phys.

(56) Entgegenhaltungen:
- CH-A- 675 897
- DE-A- 2 460 382
- DE-C- 3 132 855
- US-A- 2 904 379

## Beschreibung

Die Erfindung betrifft eine Vorrichtung der im Oberbegriff des Anspruchs 1 angegebenen Gattung.

Vorrichtungen dieser Art dienen vorwiegend dazu, aus rohr- oder stangen- und knotenförmigen Bauteilen hergestellte, vorzugsweise baukastenartig zusammensetzbare Gegenstände wie Pendeltürgriffe, Griffstangen, Gardinen- oder Duschvorhangstangen, Geländer, Handläufe, Messe- und Ausstellungsstände oder dergleichen an einzelnen, vorgewählten Stellen einer Wand oder Tür, einer Decke, am Erdboden oder dergleichen zu verankern. Dabei kommt es häufig vor, daß die Bauteile eine geringfügig größere oder kleinere Länge haben, als tatsächlich erforderlich oder aufgrund von bereits angebrachten Montagelöchern erwünscht ist. Dies trifft beispielsweise für die Montage von Vorhang-, insbesondere auch Duschvorhangstangen zu, deren Rohr- oder Stangenelemente so viele unterschiedliche Längen aufweisen können, daß seitens der Hersteller und Händler nur Elemente mit wenigen, standardisierten Längen hergestellt und/oder auf Lager gehalten werden können. In solchen Fällen ist es in der Regel erforderlich oder zumindest erwünscht, die Rohre oder Stangen an der Baustelle auf ihre im Einzelfall erforderliche Länge zu verkürzen oder zu verlängern.

Zur Lösung dieses Problems sind bekannte Vorrichtungen der eingangs bezeichneten Gattung (z.B. US-A-2 904 379) prinzipiell geeignet. Sie enthalten als spreizbares Teil einen aus Gummi oder dergleichen bestehenden, elastisch verformbaren Körper, der in der Aufnahmeöffnung zwischen dem Spreizteil und einem Schraubenkopf axial zusammengedrückt wird. Die damit einhergehende Querschnittserweiterung des spreizbaren Teils wird dazu genutzt, dieses in der Aufnahmeöffnung zu verspannen und dadurch das Bauteil fest mit dem Halteteil zu verbinden, bevor dieses seinerseits an einer Wand oder dergleichen befestigt wird. Ein wesentlicher Vorteil dieser bekannten Vorrichtung besteht darin, daß sich die Verbindung der Halteteile und Bauteile auf einfache Weise und zerstörungsfrei herstellen und wieder lösen läßt. Daher könnten die Bauteile ohne große Schwierigkeiten an der Baustelle verkürzt oder verlängert und dann mit den Halteteilen verbunden werden. Nachteilig ist dagegen, daß diese bekannte Vorrichtung keinen so hohen statischen Belastungen standhalten kann, wie für die oben genannten Gegenstände häufig gefordert wird, daß zum Herstellen oder Lösen der Verbindung zwischen Halteteil und Bauteil eine relative Drehung dieser beiden Teile zueinander erforderlich ist und daß die beschriebene Vorrichtung nur für Bauteile mit Aufnahmeöffnungen geeignet ist, die einen unrunden Querschnitt besitzen.

Insbesondere die zuletzt genannte Besonderheit macht die Vorrichtung der eingangs bezeichneten Gattung für die meisten genannten Gegenstände unbrauchbar, deren Aufnahmeöffnungen durchweg zylindrisch sind, weil sie sich an den Enden von zylindrischen Rohren befinden, die z.B. aus Stahl, aus mit Kunststoff beschichtetem oder mit Kunststoff ummanteltem Stahl oder auch nur aus Kunststoff bestehen. In solchen Fällen werden daher Vorrichtungen einer zweiten Gattung angewendet, die z.B. Halteteile in Form von Befestigungsbolzen, die auf einer oder auf beiden Seiten einer Wand oder Tür benutzbar sind und mit dem jeweiligen Bauteil verstiftet werden (DE-U-71 17 167), von an die Bauteile angeschweißten Rosettenunterteilen (DE-A-31 32 855) oder auch von Rosettenunterteilen mit Ansätzen aufweisen, die an spezielle, in den Aufnahmeöffnungen ausgebildete Zapfen angepaßt sind und mit diesen verschraubt werden (DE-C-24 60 382). Derartige Vorrichtungen sind in statischer Hinsicht voll befriedigend und auch beim Vorhandensein von zylindrischen Aufnahmeöffnungen ohne weiteres anwendbar, weisen aber im Gegensatz zu den Vorrichtungen der zuerst genannten Gattung den wesentlichen Nachteil auf, daß eine im Bedarfsfall erforderliche Längenänderung der Rohr- oder Stangen- und Knotenelemente sehr kompliziert ist. Denn für eine Verkürzung wäre es z.B. erforderlich, entweder zunächst die beschriebenen Stift- oder Schweißverbindungen zu lösen und nach dem Verkürzen der Bauteile wieder herzustellen oder sogar funktionell angepaßte, in den Aufnahmeöffnungen befindliche Funktionselemente so zu zerstören, daß die Bauteile nach der Längenänderung praktisch unbrauchbar sind. Zur Verlängerung eines Bauteils wäre es dagegen erforderlich, entweder ein kurzes Rohrstück zusätzlich einzufügen, wozu aus statischen Gründen eine zusätzliche Zentrierhülse benötigt würde, sofern die Länge des Gewindebolzens der vorhandenen Vorrichtung eine derartige Verlängerung überhaupt zuläßt, angepaßte Funktionselemente zu verändern oder andere zusätzliche Arbeiten zu verrichten. Das ist in der Regel nicht nur nicht zumutbar, sondern wegen fehlender Werkzeuge und Ersatzteile an der Baustelle auch meistens nicht durchführbar.

Da somit keine der bekannten Vorrichtungen für den genannten Zweck geeignet ist, ist es in den meisten Fällen üblich, beim Hersteller ein neues Rohr- oder Stangenelement mit der erforderlichen oder gewünschten Länge anzufordern. Die dadurch an der Baustelle auftretenden Verzögerungen und Mehrkosten bei der Montage müssen in Kauf genommen werden.

Der Erfindung liegt daher die Aufgabe zugrunde, die Vorrichtung der zuerst beschriebenen Gattung dadurch zu verbessern, daß sich die Verbindung zwischen Halteteil und Bauteil zwar weiterhin ohne weiteres herstellen und wieder lösen läßt, daß aber dennoch auch statisch anspruchsvolle Gegenstände hergestellt und Bauteile mit Aufnahmeöffnungen vorgesehen werden können, die kreisrunde Querschnitte besitzen. Dabei soll die Vorrichtung insbesondere so ausgebildet sein, daß die Bauteile nach der Demontage verlängert oder verkürzt werden können, ohne daß dabei wichtige Funktionsteile zerstört oder die Bauteile in anderer Weise unbrauchbar gemacht werden.

Zur Lösung dieser Aufgabe dienen die kennzeichnenden Merkmale des Anspruchs 1.

Die Schraubenverbindung enthält vorzugsweise einen zur radialen Verspannung des spreizbaren Teils in der Aufnahmeöffnung bestimmten Gewindebolzen und ein dem Gewindebolzen zugeordnetes, die Verspannung ermöglichendes Element.

Der Gewindebolzen ist vorzugsweise entweder am Spreizteil starr befestigt, in welchem Fall das Element eine auf ihn aufschraubbare Mutter ist, oder in einen Innengewindeabschnitt des Spreizteils eindrehbar, in welchem Fall das Element vorzugsweise aus einem starr am Gewindebolzen befestigten radialen Ansatz, z.B. einem üblichen Schraubenkopf, besteht. Beide Ausführungsbeispiele ermöglichen es, die Verbindung herzustellen, ohne daß eine relative Drehung des Bauteils zum Halteteil erforderlich ist. Das Element stützt sich vorzugsweise auf der vom Spreizteil abgewandten Seite des Halteteils ab. Es kann daher mit einem Werkzeug, z.B. einem Schraubenzieher oder Schraubenschlüssel, gedreht werden. Die hierdurch auf das Spreizteil ausgeübte Zugkraft wird mittels dessen Spreizflächen direkt auf die entsprechenden Flächen des spreizbaren Teils übertragen und damit in eine quer zur Zugrichtung wirkende Kraft umgewandelt, so daß ein hoher radialer Druck auf das spreizbare Teil ausgeübt und eine sehr stabile Verbindung hergestellt werden kann.

Die Erfindung wird nachfolgend in Verbindung mit der beiliegenden Zeichnung an Ausführungsbeispielen näher erläutert. Es zeigen:
- Fig. 1: die Unteransicht einer Kombination aus Halteteil und spreizbarem Teil nach einer ersten Ausführungsform der Erfindung, etwa im Maßstab 2 : 1;
- Fig. 2: einen Schnitt längs der Linie II-II der Fig. 1;
- Fig. 3: die Vorderansicht eines Spreizteils für die Kombination nach Fig. 1 und 2, etwa im Maßstab 2 : 1;
- Fig. 4: einen Schnitt längs der Linie IV-IV der Fig. 3;
- Fig. 5: eine Draufsicht auf das Spreizteil nach Fig. 3;
- Fig. 6: einen Längsschnitt durch die Gesamtvorrichtung nach Fig. 1 bis 5 im montierten Zustand;
- Fig. 6A und 6B: einen der Fig. 6 entsprechenden Schnitt nach Verkürzung bzw. Verlängerung eines mit der Vorrichtung verbundenen Bauteils;
- Fig. 7: einen der Fig. 6 entsprechenden Schnitt durch eine zweite Ausführungsform der Erfindung;
- Fig. 8: eine der Fig. 1 entsprechende Unteransicht einer zweiten Ausführungsform der erfindungsgemäßen Kombination aus Halteteil und spreizbarem Teil;
- Fig. 9: eine Vorderansicht der Vorrichtung nach Fig. 8;
- Fig. 10: einen Schnitt längs der Linie X-X der Fig. 8;
- Fig. 11 und 12: eine Vorder- bzw. Unteransicht eines Spreizteils für die Kombination nach Fig. 8 bis 10; und
- Fig. 13: einen Längsschnitt durch die Gesamtvorrichtung nach Fig. 8 bis 12 im montierten Zustand.

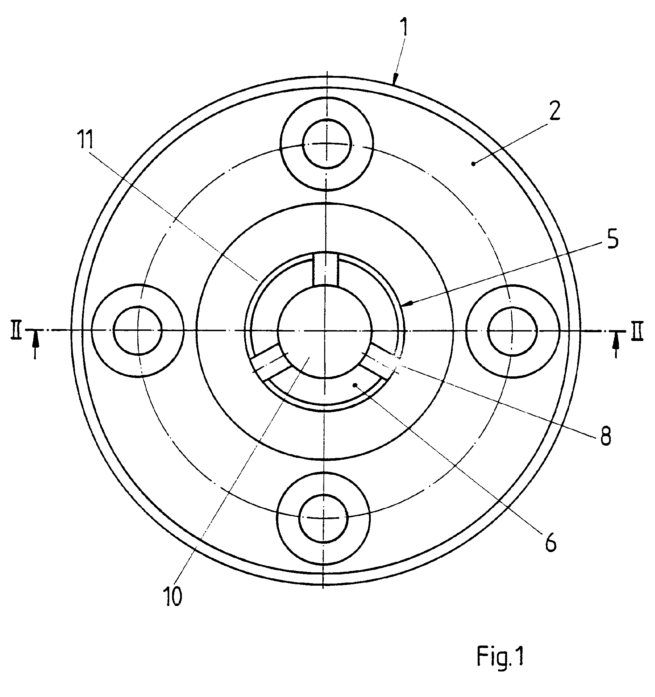

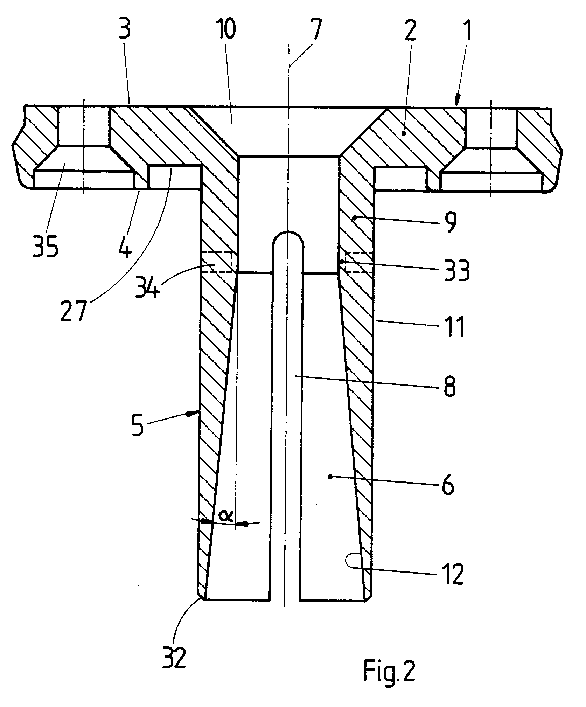

Nach Fig. 1 und 2 enthält ein Halteteil 1 der erfindungsgemäßen Vorrichtung eine z.B. kreisrunde, im wesentlichen planparallele Platte 2, deren Rückseite 3 zwecks Anlage an einer Wand, Tür oder dergleichen zweckmäßig eben ist. An der Vorderseite 4 und vorzugsweise in deren Zentrum ist ein senkrecht vom Halteteil 1 abstehendes, spreizbares Teil 5 befestigt, das hülsenartig ausgebildet ist und eine Mehrzahl von (hier drei) vorzugsweise identischen Segmenten 6 enthält, die durch parallel zu einer Längsachse 7 verlaufende, vorzugsweise um gleiche Winkel beabstandete Schlitze 8 getrennt sind. Die Segmente 6 weisen Außenflächen auf, die auf einer Zylinderfläche liegen und sich im Ausführungsbeispiel über etwas weniger als ein Drittel dieser Zylinderfläche erstrecken. Die Innenflächen der Segmente 6 dagegen liegen auf einer Konusfläche, erstrecken sich über etwas weniger als ein Drittel derselben und enden auf der der Platte 2 zugewandten Seite an einem zylindrischen Ring 9. Das Vorderende dieses Rings 9 grenzt direkt an die Vorderseite 4 der Platte 2, die an dieser Stelle ein Mittelloch 10 mit einem dem Innendurchmesser des Rings 9 entsprechenden Durchmesser aufweist. Dabei sind die Segmente 6 so mit dem Ring 9 verbunden, daß alle Außenflächen im wesentlichen eine gemeinsame, nur durch die Schlitze 8 getrennte, zylindrische äußere Mantelfläche 11 und ihre Innenflächen entsprechend eine gemeinsame konische innere Mantelfläche 12 mit der Längsachse 7 als Achse bilden. Der Durchmesser der äußeren Mantelfläche 11 ist etwas kleiner als der Durchmesser einer Aufnahmeöffnung, in welcher das spreizbare Teil 5 befestigt werden soll. Die innere konische Mantelfläche 12 weist einen vom Hinterende in Richtung des Vorderendes allmählich kleiner werdenden Durchmesser auf, wobei der Steigungswinkel α (Fig. 2) vorzugsweise nur wenige Grad, z.B. 5° beträgt.

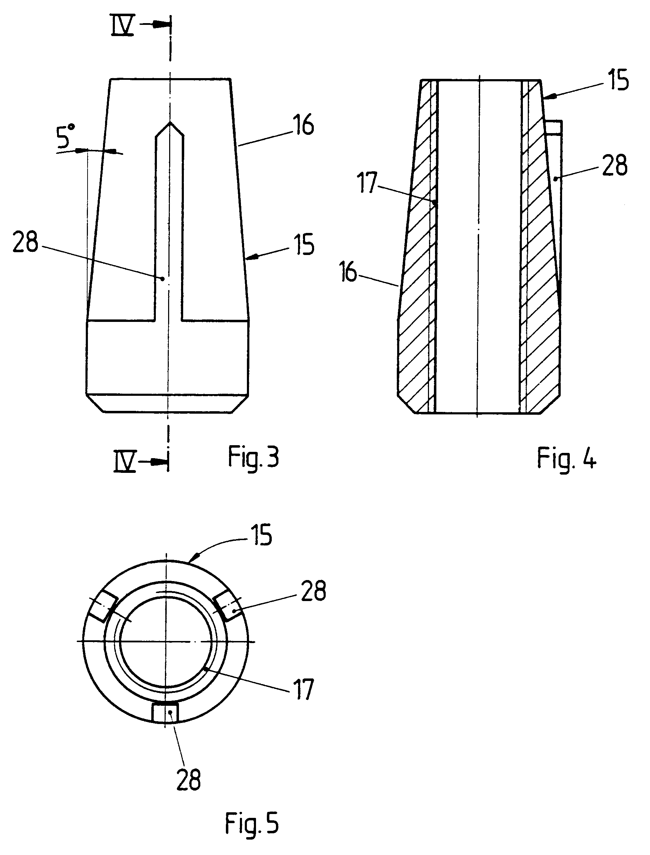

Ein im wesentlichen hohlzylindrisches Spreizteil 15 der Vorrichtung ist nach Fig. 3 bis 5 so geformt, daß es zumindest teilweise in das spreizbare Teil 5 einführbar ist. Zwecks Erzeugung einer ausreichend großen Flächenpressung ist das Spreizteil 15 mit einer äußeren konischen Spreizfläche 16 versehen, die im wesentlichen dieselbe Steigung wie die innere konische Mantelfläche 12 des spreizbaren Teils 5 (Steigungswinkel α in Fig. 2) und einen Durchmesser aufweist, der von ihrem Hinterende in Richtung des Vorderendes allmählich abnimmt. Dabei ist der kleinste Durchmesser etwas kleiner als der größte Durchmesser der inneren Mantelfläche 12 des spreizbaren Teils 5 und das Größenverhältnis vorzugsweise so gewählt, daß die Spreizfläche 16 des Spreizteils 15 wenigstens etwa mit der Hälfte der Mantelfläche 12 in Berührung gebracht werden kann, um eine großflächige Wechselwirkung zwischen den beiden Teilen 5 und 15 zu ermöglichen. Beim Ausführungsbeispiel ist das Spreizteil 15 außerdem mit einem in Achsrichtung durchgehenden Gewindeabschnitt 17 versehen.

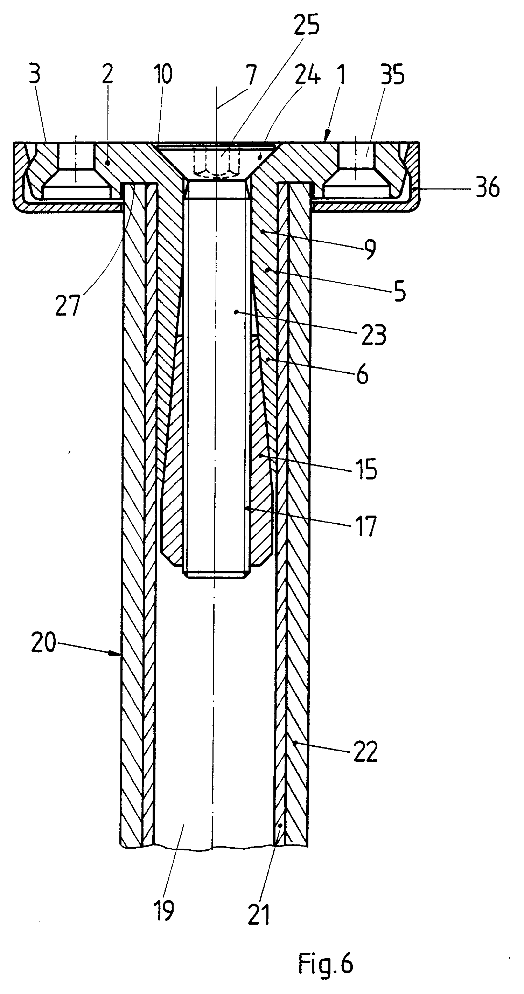

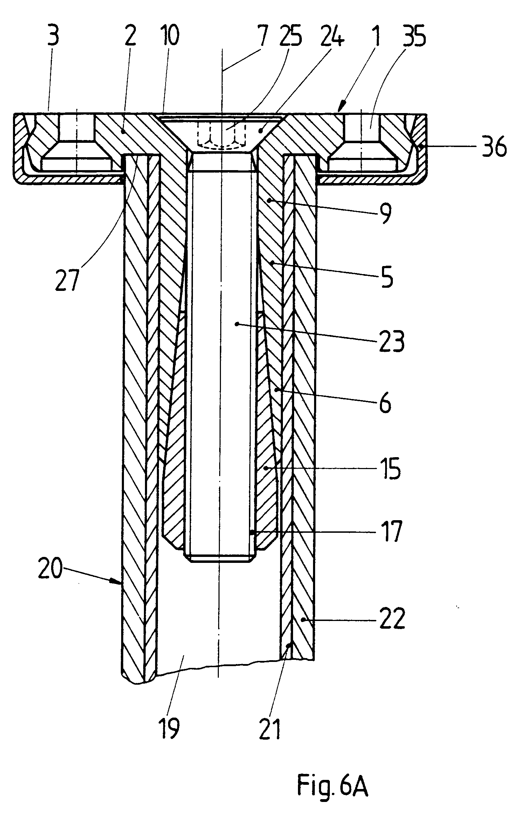

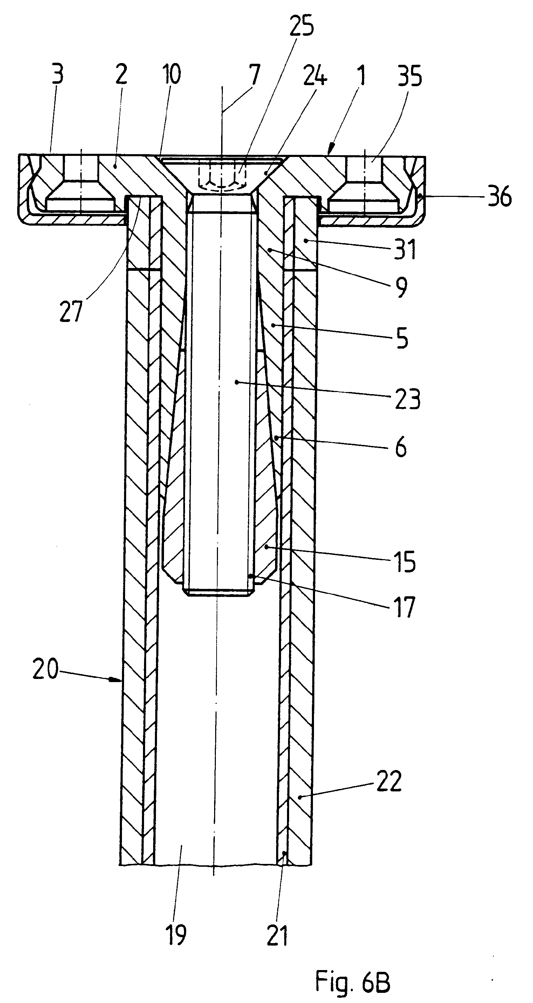

Fig. 6 zeigt die Vorrichtung im montierten Zustand in einer zylindrischen Aufnahmeöffnung 19 eines Bauteils 20, das im Ausführungsbeispiel aus einem Rohrelement mit einer hohlzylindrischen Metalleinlage 21 und einer auf diese aufgezogenen, ebenfalls hohlzylindrischen Kunststoffummantelung 22 besteht, die beide koaxial zur Längsachse 7 des spreizbaren Teils 5 und koaxial zu den Längsachsen eines Gewindebolzens 23 und des Spreizteils 15 angeordnet sind. Dem Gewindebolzen 23 ist ein die Verspannung des spreizbaren Teils 15 im Bauteil 20 ermöglichendes Element 24 zugeordnet. Beim Ausführungsbeispiel nach Fig. 6 besteht der Gewindebolzen 23 aus einer normalen Senkkopfschraube, deren Kopf das Element 24 bildet, im enstprechend ausgebildeten Mittelloch 10 versenkt angeordnet werden kann und z.B. eine Aufnahme 25 für einen Imbusschlüssel aufweist.

Die Montage erfolgt dadurch, daß zunächst das Spreizteil 15 vom Hinterende her in das spreizbare Teil 5 geschoben, dann der Gewindebolzen 23 von der Rückseite 3 der Platte 2 her durch das Mittelloch 10 und den Ring 9 hindurch lose in das Spreizteil 15 eingeschraubt und danach das spreizbare Teil 5 in die Aufnahmeöffnung 19 eingeführt wird. Abschließend wird der Gewindebolzen 23 mittels eines am Element 24 angesetzten Werkzeugs festgezogen, wodurch das Spreizteil 15 immer tiefer in das spreizbare Teil 5 hineingezogen wird und dessen Segmente 6 radial nach außen gegen den zylindrischen Innenmantel der Metalleinlage 21 gedrückt werden. Die dabei auf den Gewindebolzen 23 ausgeübte Zugkraft wird über die Spreizfläche 16 direkt auf die mit ihr zusammenwirkende Fläche 12 des spreizbaren Teils 5 übertragen, so daß sich auch bei glatten Flächen hohe Klemmkräfte erzielen lassen. Das als Widerlager wirksame Element 24 stützt sich dabei an der Platte 2 oder auch an einem zusätzlichen, zwischen ihm und der Platte 2 befindlichen Teil ab, stellt beim Verspannen eine feste axiale Lage des Gewindebolzens 23 relativ zur Platte 2 sicher und ermöglicht dadurch die Verspannung. Ohne das Element 24 würde sich der Gewindebolzen 23 lediglich immer mehr in das Spreizteil 15 eindrehen, ohne dieses gegen das zu spreizende Teil 5 ziehen zu können.

Um die Vorrichtung unter einer Vielzahl von denkbaren Betriebszuständen sicher in der Aufnahmeöffnung 19 befestigen zu können, sind vorzugsweise einige zusätzliche Hilfsmittel vorgesehen.

Zunächst wäre es, insbesondere bei glatten Innenflächen der Metalleinlage 21 und glatten Außenflächen des spreizbaren Teils 5 denkbar, daß das spreizbare Teil 5 und das Spreizteil 15 beim Drehen des Gewindebolzens 23 einfach als Einheit in der Aufnahmeöffnung 19 mitgedreht werden. Um dieses zu verhindern, ist das spreizbare Teil 5 zweckmäßig fest mit der Platte 2 verbunden, indem es z.B. mit dieser aus Kunststoff durch Spritzguß in einem Stück hergestellt ist. Dadurch kann die Platte 2 und mit ihr das spreizbare Teil 5 bei der Montage mit der Hand festgehalten werden, bis der Spreizvorgang abgeschlossen ist. Alternativ könnten die äußere Mantelfläche 11 des spreizbaren Teils 5 und/oder die innere zylindrische Mantelfläche der Metalleinlage 21 aber auch ausreichend aufgerauht sein, um ein Mitdrehen des spreizbaren Teils 5 wenigstens dann zu verhindern, wenn dieses durch das Spreizteil 15 schon etwas vorgespannt ist. Damit sich das Bauteil dabei richtig auf dem Halteteil 1 zentriert, weist dieses auf seiner Vorderseite 4 vorzugsweise eine Ringnut 27 auf, in welche das Vorderende des Bauteils 20 bei der Montage eingelegt wird.

Um ein Mitdrehen nur des Spreizteils 15 mit dem Gewindebolzen 23 zu vermeiden, ist die Vorrichtung mit einem Mittel versehen, das derartige Drehungen verhindert. Dieses Mittel besteht z.B. aus einer in axialer Richtung wirksamen Nut/Feder-Verbindung, mittels derer das Spreizteil drehfest im spreizbaren Teil gelagert ist und die beispielsweise aus einem der Schlitze 8 (Fig. 1) und einem seitlichen, radial abstehenden und in diesen Schlitz 8 ragenden, am Spreizteil 15 angebrachten Steg 28 (Fig. 3 bis 5) gebildet ist. Dieser Steg 28 kann z.B. mit dem Spreizteil 15 aus einem Stück hergestellt, aber auch nachträglich angebracht sein. Entsprechend ist die Wirkung des Rings und der Nut/ Feder-Verbindung, wenn die Vorrichtung wieder demontiert werden soll. Wie insbesondere Fig. 5 zeigt, können auch drei solche Stege 28 vorgesehen sein, die in je einen der drei Schlitze ragen.

Wie Fig. 6A zeigt, kann das Bauteil 20 auf einfache Weise gekürzt werden. Hierzu wird der Bolzen 23 geringfügig losgedreht, wobei sich das Element 24 etwas von der Platte 2 abhebt, und dann dem Gewindebolzen 23 ein Schlag in axialer Richtung versetzt, wodurch das Spreizteil 15 im spreizbaren Teil 5 axial verschoben wird, bis das Element 24 wieder auf der Platte 2 aufliegt. Dadurch ist die Verspannung gelöst, und die ganze Vorrichtung kann nun aus der Aufnahmeöffnung 19 herausgezogen werden. Das Bauteil 20 wird dann, wie in Fig. 6A angedeutet ist, an seinem Vorderende etwas verkürzt, und anschließend wird die Vorrichtung wieder eingesetzt. Da sie danach wieder dieselbe relative Lage zum Vorderende des Bauteils 20 einnimmt, ergeben sich auch dieselben statischen Verhältnisse. Voraussetzung ist dabei natürlich, daß die Aufnahmeöffnung 19 lang genug ist, um auch nach der Verkürzung die Teile 5,15 aufnehmen zu können.

Das Bauteil 20 kann auch auf einfache Weise verlängert werden. Hierzu wird ein kurzes, ebenfalls aus einer Metalleinlage und einer Kunststoffummantelung bestehendes, rohrförmiges Bauteil 31 koaxial auf das Vorderende des Bauteils 20 aufgelegt und danach die Vorrichtung eingesetzt und in der beschriebenen Weise befestigt. Dabei kommt ein Vorderabschnitt des spreizbaren Teils 5 im Bauteil 31 zu liegen, so daß das Teil 5 gleichzeitig als Zentrierelement wirkt. Die axiale Länge des spreizbaren Teils 5 ist daher vorzugsweise so groß, z.B. wenigstens ca. 40 mm, daß ein Teil dieser Länge für etwa notwendige Verlängerungen verwendet werden kann, ohne daß die mechanische Stabilität aufgrund des kürzeren, im Bauelement 20 verbleibenden Abschnitts des Teils 5 wesentlich abnimmt. Alternativ wäre es natürlich auch möglich, zusätzliche Vorrichtungen mit besonders großer Länge herzustellen, die speziell der Verlängerung von Bauteilen dienen.

Zur Herstellung von Verbindungen, die hohen statischen Anforderungen entsprechen müssen, z.B. bei Geländern, Brüstungen oder dergleichen, bestehen die Platte 2, das spreizbare Teil 5, der Gewindebolzen 23 und das Spreizteil 15 vorzugsweise aus Stahl. Dadurch wird sichergestellt, daß die Vorrichtungen in Kombination mit den Metalleinlagen 21 ein auch im Brandfall erhalten bleibendes Skelett bilden. Um dabei zu vermeiden, daß die Außenflächen der Segmente 6 beim Spreizvorgang im wesentlichen nur mit ihren Hinterenden 32 (Fig. 2) und daher nur mit Linien- oder sogar Punktberührung im jeweiligen Anschlußende verklemmt werden, sind die Segmente 6 an ihren Vorderenden vorzugsweise mit Hilfe von verformbaren Teilen 33 mit dem Ring 9 verbunden. Diese verformbaren Teile 33 bestehen vorzugsweise aus dünnen Verbindungsstegen oder Wandabschnitten, die dadurch entstehen, daß zwischen dem Ring 9 und der von den Segmenten 6 gebildeten äußeren Mantelfläche 11 durch Drehen oder Fräsen eine in Fig. 2 nur gestrichelt angedeutete Rille 34 bzw. Nut ausgebildet wird, die bis dicht an die innere Mantelfläche 12 heranreicht. Wird bei dieser Anordnung entsprechend Fig. 6 durch Festziehen des Gewindebolzens 23 ein radialer Druck erzeugt, dann können die Segmente 6 unter Verbiegung der verbiegbaren Teile 33 praktisch auf ihrer ganzen Länge gegen die zylindrische Innenwand der Metalleinlage 21 gepreßt werden, so daß aufgrund des großflächigen Kontakts und der damit verbundenen großen Flächenpressung die erwünschte große Reibkraft auch dann erzeugt wird, wenn die zusammenwirkenden Flächen glatt sind. Alternativ können die genannten Teile auch aus Kunststoff, insbesondere durch Spritzguß, hergestellt sein, in welchem Fall die Rillen 34 wegen der meistens größeren Flexibilität des Kunststoffmaterials in der Regel nicht erforderlich sind bzw. die Segmente 6 so an den Ring 9 angeformt werden können, daß sich die gewünschte Wirkung ergibt.

Nachdem die Vorrichtung im Bauteil 20 befestigt ist, kann das Halteteil 1 auf herkömmliche Weise an einer Wand oder dergleichen befestigt werden, auf die es mit seiner Rückseite 3 aufgelegt wird. Hierzu weist die Platte 2 an ihrem das Mittelloch 10 umgebenden Umfang übliche Schraublöcher 35 auf. Danach kann die Platte 2, die vorzugsweise nur das Unterteil einer zweiteiligen Rosette bildet, in bekannter Weise mit einer auf das Bauteil 20 aufgezogenen Abdeckkappe 36 abgedeckt werden.

Wie ein Vergleich der Fig. 6, 6A und 6B zeigt, wirkt der Ring 9 als Zentrierstück und die Ringnut 27 als Auflage für das Bauteil 20. Dies hat den Vorteil, daß diese Funktion auch nach dem Verkürzen oder Verlängern des Bauteils 20 erhalten bleibt. Dadurch wird beim Verlängern kein zusätzliches Zentrierstück erforderlich. Weil bei dieser Anordnung außerdem kein aus der Kunststoffummantelung 22 herausragender Abschnitt der Metalleinlage 21 als Zentrierstück benötigt wird, ergibt sich der weitere wesentliche Vorteil, daß die Metalleinlage 21 und die Kunststoffummantelung 22 dieselbe axiale Länge erhalten und gemeinsam in der Ringnut 27 angeordnet werden können. Hierdurch ist es möglich, die Bauteile 20 ohne vorherige Trennung der Kunststoffummantelung 22 von den Metalleinlagen 21 zu verkürzen oder entsprechend Fig. 6B mittels einfacher Zwischenstücke zu verlängern.

Beim Losdrehen der aus Fig. 6 ersichtlichen Verbindung könnte sich unter ungünstigen Umständen das Spreizteil 15 vom Gewindebolzen 23 lösen. Dies allein oder auch ein zusätzlicher, unbeabsichtigt auf den Gewindebolzen 23 ausgeübter Schlag könnte dann zur Folge haben, daß das Spreizteil 15 im Bauteil 20 herabfällt. Ist dessen anderes Ende z.B. mit anderen Bauteilen fest verbunden, wäre das Spreizteil 15 verloren oder allenfalls durch Demontage auch der anderen Bauteile wieder zu erlangen. Ein derartiges Lösen des Spreizteils 15 wird in weiterer Ausgestaltung der Erfindung vorzugsweise dadurch verhindert, daß es unverlierbar mit dem spreizbaren Teil 5 verbunden wird, indem z.B. einer der Schlitze 8 an seinem Hinterende verschlossen oder wenigstens ein Segment an seinem Hinterende mit einer radial nach ihnen ragenden Umbiegung versehen wird und dadurch zumindest im montierten Zustand ein Herabfallen des Spreizteils 15 im Bauteil 20 verhindert ist. Dabei sind die beteiligten Segmente 6 ausreichend elastisch auszubilden, damit das Fügen der Vorrichtung nicht behindert wird.

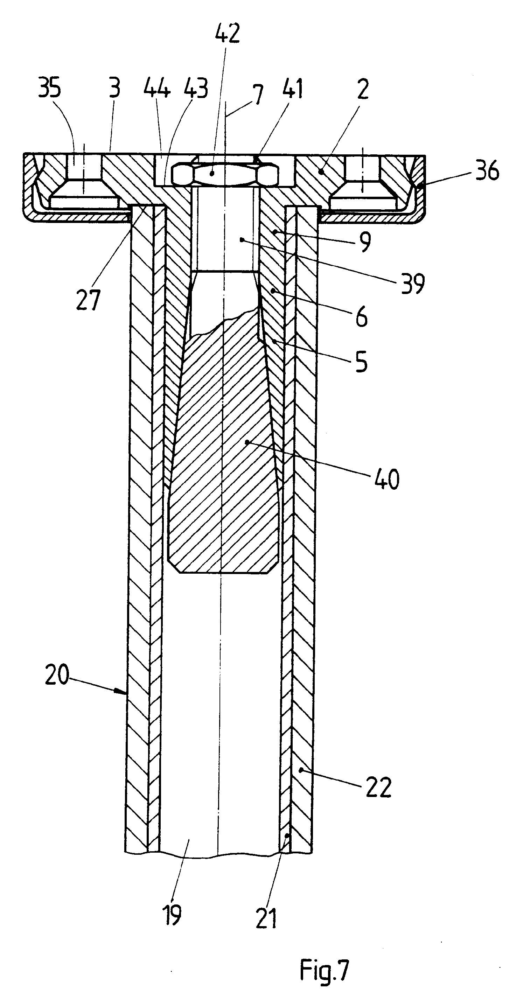

Die Ausführungsform nach Fig. 7 unterscheidet sich von der Ausführungsform nach Fig. 1 bis 6 dadurch, daß ein Gewindebolzen 39 und ein Spreizteil 40 fest miteinander verbindbar oder fest miteinander verbunden und dazu beispielsweise aus einem Stück hergestellt sind. Der Bolzen 39 weist einen Außengewindeabschnitt auf, dessen freies Ende 41 möglichst mit der Rückseite 3 der Platte 2 bündig abschließt. Auf dieses Ende ist ein Element 42 aufgeschraubt, das im Gegensatz zum Element 24 aus einer Mutter besteht, die ein Innengewinde und einen z.B. sechseckigen Außenquerschnitt aufweist und sich im montierten Zustand am Boden 43 einer Erweiterung 44 des Mittellochs der Platte 2 abstützt und in dieser Erweiterung 44 vorzugsweise versenkt, aber so angeordnet ist, daß sie ohne weiteres mit einem entsprechenden Werkzeug betätigt werden kann. Im übrigen kann die Vorrichtung nach Fig. 7 wie die Vorrichtung nach Fig. 1 bis 6 ausgebildet sein, weshalb auch insoweit für gleiche Teile dieselben Bezugszeichen verwendet sind.

Im Gegensatz zu Fig. 6 bis 6B erfolgt die Befestigung der Vorrichtung nach Fig. 7 dadurch, daß zunächst das spreizbare Teil 5 in die Aufnahmeöffnung 19 eingeführt wird, bis das Bauteil 20 am Boden der Ringnut 27 aufliegt, und dann das Element 42 auf dem Gewindebolzen 39 festgezogen wird. In diesem Fall ermöglicht das Element 42 eine Verspannung des spreizbaren Teils 5, da es sich beim Drehen in Festziehrichtung zunächst gegen die Platte 2 od. dgl. legt, dadurch als Widerlager mit fester relativer axialer Lage zur Platte 2 wirkt und beim Weiterdrehen das Spreizteil 40 in das spreizbare Teil 5 hineinzieht. Daran anschließend kann das Halteteil 1 an einer Wand od. dgl. befestigt werden. Im übrigen dient das Element 42 wie auch das Element 24 dem Zweck, ein Werkzeug anzusetzen und dadurch die Verspannung herzustellen.

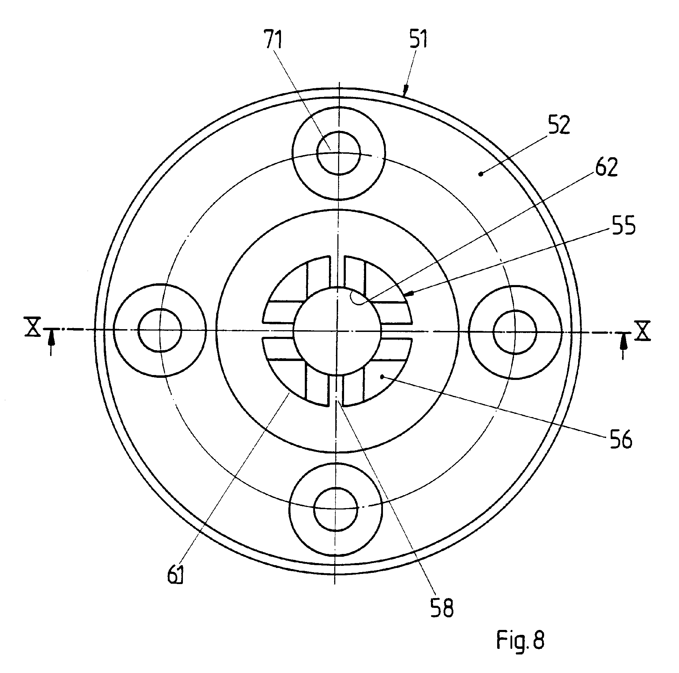

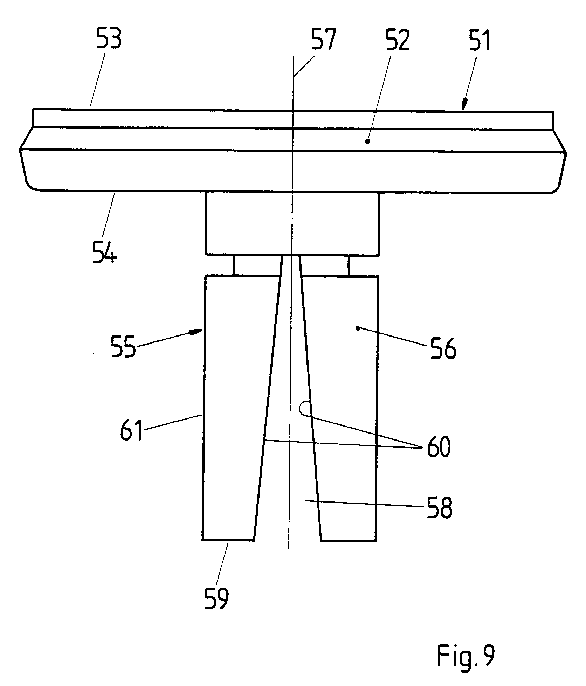

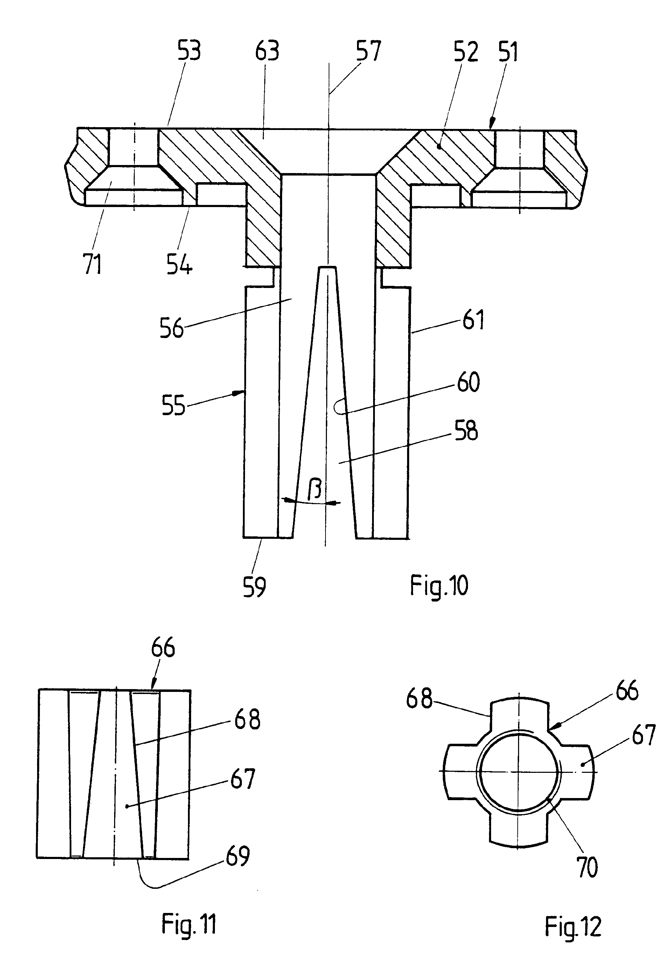

Bei der Ausführungsform nach Fig. 8 bis 13 enthält ein Halteteil 51 der erfindungsgemäßen Vorrichtung eine z.B. kreisrunde, im wesentlichen planparallele Platte 52, deren Rückseite 53 zwecks Anlage an einer Wand, Tür od. dgl. zweckmäßig eben ist. An der Vorderseite 54 und vorzugsweise in deren Zentrum ist ein senkrecht vom Halteteil 51 abstehendes, spreizbares Teil 55 befestigt, das hülsenartig ausgebildet ist und eine Mehrzahl von (hier vier) vorzugsweise identischen Segmenten 56 enthält. Im Gegensatz zu Fig. 1 bis 7 sind diese Segmente 56 nicht durch exakt parallel zu einer Längsachse 57 verlaufende Schlitze, sondern durch Schlitze 58 getrennt, die sich zwar in Längsrichtung des spreizbaren Teils 55 erstrecken, aber keilförmig ausgebildet sind. Wie Fig. 8 bis 10 zeigen, haben die Schlitze 58 im Längsschnitt etwa die Form eines gleichschenkeligen Dreiecks, dessen Grundseite am Hinterende 59 des Teils 55 liegt und dessen beiden Schenkel durch die entsprechend schräg zur Längsachse 57 verlaufenden Seitenflächen 60 (Fig. 9) der Segmente 56 gebildet sind. Ein Keilwinkel β (Fig. 10) beträgt vorzugsweise nur wenige Grad, z.B. 5°.

Die Segmente 56 besitzen im übrigen äußere Mantelflächen 61, die auf einer Zylinderfläche liegen, sowie Innenflächen 62, die abweichend von Fig. 1 bis 7 ebenfalls im wesentlichen auf einer Zylinderfläche angeordnet sind und sich wie die äußeren Mantelflächen 61 jeweils über etwas weniger als ein Viertel dieser Zylinderfläche erstrecken. Die Vorderenden der Segmente 56 sind analog zu Fig. 1 bis 7 mit der Platte 52 verbunden, die ein Mittelloch 63 aufweist, dessen kleinster Innendurchmesser etwa dem der inneren Mantelfläche 62 entspricht.

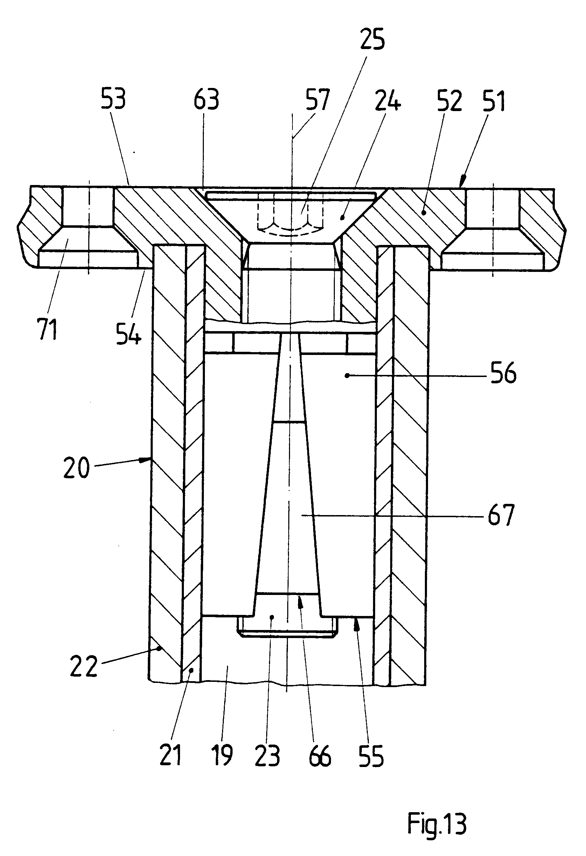

Zur Spreizung des spreizbaren Teils 55 weist die Vorrichtung Nach Fig. 11 und 12 ein im wesentlichen hohlzylindrisches Spreizteil 66 auf, das so geformt ist, daß es zumindest teilweise in das spreizbare Teil 55 einführbar ist. Zwecks Erzeugung einer ausreichend großen Spreizwirkung ist das Spreizteil 66 dort, wo das spreizbare Teil 55 die Schlitze 58 aufweist, mit radial vorstehenden, keilförmigen Ansätzen 67 versehen, deren Seitenflächen als Spreizflächen 68 wirken und in ihrer Form an die Seitenflächen 60 des spreizbaren Teils 55 angepaßt sind. Diese Ansätze 67 werden wie die Schlitze 58 vom Hinterende 69 des Spreizteils 66 in Richtung von dessen Vorderende allmählich schmaler (Fig. 11), wobei die Abmessungen der Spreizflächen 68 zweckmäßig denen der Seitenflächen 60 der Schlitze 58 entsprechen, so daß sich eine großflächige Wechselwirkung beim Spreizvorgang ergibt. Dabei ist die Breite der Ansätze 67 am Vorderende des Spreizteils 66 vorzugsweise um so viel kleiner als die Schlitzbreite am Hinterende 59 des spreizbaren Teils 55, daß die Spreizteile 66 entsprechend Fig. 13 von hinten her in den spreizbaren Teilen 55 und entsprechend die Ansätze 67 von hinten her in den Schlitzen 58 so weit vorgeschoben werden können, bis die Ansätze 67 wenigstens etwa zur Hälfte in den Schlitzen 58 angeordnet sind und dadurch eine hohe Radialkraft auf das spreizbare Teil 55 ausüben können. Beim Ausführungsbeispiel ist das Spreizteil 66 außerdem mit einem in Achsrichtung durchgehenden Innengewindeabschnitt 70 versehen, in den der Gewindebolzen 23 des Ausführungsbeispiels nach Fig. 1 bis 6 eingeschraubt werden kann.

Fig. 13 zeigt die Vorrichtung im montierten Zustand in der zylindrischen Aufnahmeöffnung 19 des Bauteils 20, das entsprechend Fig. 6 und 7 ausgebildet ist. Die Montage erfolgt auch bei diesem Ausführungsbeispiel dadurch, daß zunächst das Spreizteil 66 vom Hinterende her in das spreizbare Teil 55 geschoben, dann der Gewindebolzen 23 von der Vorderseite her durch das Mittelloch 63 der Platte 52 hindurch lose in das Spreizteil 66 eingeschraubt und danach das spreizbare Teil 55 in die Aufnahmeöffnung 19 eingeführt wird. Abschließend wird der Gewindebolzen 23 mittels eines am Element 24 angesetzten Werkzeugs festgezogen, wodurch das Spreizteil 66 immer tiefer in das spreizbare Teil 55 hineingezogen wird. Die Spreizflächen 68 legen sich dabei an die ihnen zugewandten Seitenflächen 60 der Segmente 56 an und drücken diese dadurch immer mehr in Umfangsrichtung auseinander und folglich radial nach außen gegen den zylindrischen Innenmantel der Metalleinlage 21. Bei diesem Ausführungsbeispiel kann das spreizbare Teil 55 mit um so mehr Flächenpressung in der Aufnahmeöffnung 19 verspannt werden, je größer die Zahl der Schlitze 58 und Ansätze 67 bzw. der zusammenwirkenden Flächen 60, 68 ist. Nach der Verbindung kann das Halteteil 52 mittels Schraublöchern 71 an einer Wand od. dgl. befestigt werden.

Die Vorrichtung nach Fig. 8 bis 13 kann in allen Varianten hergestellt und benutzt werden, die oben und nachfolgend für die Vorrichtung nach Fig. 1 bis 7 beschrieben und beansprucht sind. Dies gilt insbesondere für die anhand der Fig. 7 erläuterte Variante.

Die Erfindung ist nicht auf die beschriebenen Ausführungsbeispiele beschränkt, die sich auf vielfache Weise abwandeln lassen. Bei den Ausführungsformen nach Fig. 1 bis 6 und 8 bis 13 beispielsweise braucht das Element 24 nicht mit dem Gewindebolzen 23 aus einem Stück bestehen, sondern kann auch nachträglich auf diesen aufgezogen und an ihm befestigt sein. Weiter kann das spreizbare Teil mehr oder weniger als die dargestellten axialen Schlitze 8 bzw. 58 aufweisen. Insbesondere ist es auch möglich, das spreizbare Teil durch zwei oder mehr Segmente 6 bzw. 56 zu bilden, die voneinander getrennt, d.h. nicht fest mit dem Halteteil 1 bzw. 51 verbunden sind, in welchem Fall auch bei Segmenten aus Stahl keine besonderen verformbaren Teile vorgesehen werden müßten. Hierbei bietet sich insbesondere die Anwendung von zwei aus Halbschalen bestehenden Segmenten an. Weiterhin eignet sich die Vorrichtung auch zur Befestigung von anderen als rohrförmigen Bauteilen, nämlich insbesondere z.B. von gebogenen, kreuz- oder T-förmigen Knotenelementen mit entsprechend ausgebildeten Aufnahnmeöffnungen. Schließlich ist es möglich, die Formen der Innenquerschnitte der Ausnehmungen und der Außenquerschnitte der spreizbaren Teile zumindest teilweise unterschiedlich zu wählen, d.h. z.B. mit zylindrischen Ausnehmungen zusammenwirkende, spreizbare Teile vorzusehen, deren Außenquerschnitte sechs- oder achteckig ausgebildet sind. Auch insoweit brauchen sich die entsprechenden Durchmesser bzw. Querschnitte nur im wesentlichen zu entsprechen. Das Maß an Übereinstimmung wird dabei hauptsächlich durch die zu übertragenden Kräfte bzw. die zu erzielende Stabilität der Verbindung und die im Einzelfall verwendeten Materialien bestimmt sein.

## Patentansprüche

1. Vorrichtung zur Befestigung eines insbesondere rohrförmigen, eine Aufnahmeöffnung (19) aufweisenden Bauteils (20) an einer Wand od. dgl., bestehend aus einem ein Loch (10,63) aufweisenden Halteteil (1,51), einem zur Einführung in die Aufnahmeöffnung bestimmten und einen Durchgang aufweisenden spreizbaren Teil (5,55) und einer zur Spreizung des spreizbaren Teils und zur Verbindung des Halteteils mit dem Bauteil bestimmten Schraubverbindung, dadurch gekennzeichnet, daß das spreizbare Teil (5, 55) wenigstens zwei Segmente (6, 56) aufweist, die durch wenigstens einen in Längsrichtung des spreizbaren Teils (5, 55) verlaufenden Schlitz (8, 58) getrennt sind, und daß ein zumindest teilweise in den Durchgang einführbares Spreizteil (15, 40, 66) vorgesehen ist, das wenigstens eine Spreizfläche (16, 68) aufweist, die mit einer an sie angepaßten Fläche (12, 60) des spreizbaren Teils (5, 55) großflächig zusammenwirkt.

2. Vorrichtung nach Anspruch 1, dadurch gekennzeichnet, daß das Halteteil (1,51) mit einem Loch (10,63) versehen ist und die Schraubverbindung einen in das Loch (10,63) und den Durchgang ragenden, zur radialen Verspannung des spreizbaren Teils (5,55) in der Aufnahmeöffnung (19) bestimmten Gewindebolzen (23,39) und ein dem Gewindebolzen zugeordnetes, die Verspannung ermöglichendes Element (24,42) aufweist.

3. Vorrichtung nach Anspruch 1 oder 2, dadurch gekennzeichnet, daß im montierten Zustand das spreizbare Teil (5,55), das Spreizteil (15,40,66) und der Gewindebolzen (23,39) im wesentlichen auf der Vorderseite (4,54) und das Element (10,42) auf der Rückseite (3,53) des Halteteils (1,51) angeordnet sind.

4. Vorrichtung nach einem der Ansprüche 1 bis 3, dadurch gekennzeichnet, daß der Gewindebolzen (23) in einem Innengewindeabschnitt (17, 70) des Spreizteils (15, 66) eindrehbar ist und das Element (24) aus einem starr am Gewindebolzen (23) befestigten radialen Ansatz besteht.

5. Vorrichtung nach Anspruch 4, dadurch gekennzeichnet, daß das Element (24) als Senkkopf ausgebildet ist.

6. Vorrichtung nach einem der Ansprüche 1 bis 3, dadurch gekennzeichnet, daß der Gewindebolzen (39) am Spreizteil (40) starr befestigt ist und das Element (42) eine auf den Gewindebolzen (39) aufschraubbare oder aufgeschraubte Mutter ist.

7. Vorrichtung nach einem der Ansprüche 1 bis 6, dadurch gekennzeichnet, daß das Halteteil (1, 51) und das spreizbare Teil (5, 55) fest miteinander verbunden sind.

8. Vorrichtung nach einem der Ansprüche 1 bis 5, dadurch gekennzeichnet, daß sie ein Mittel aufweist, das eine Drehung des Spreizteils (15, 66) im spreizbaren Teil (5, 55) verhindert.

9. Vorrichtung nach Anspruch 8, dadurch gekennzeichnet, daß das Mittel nach Art einer Nut/Feder-Verbindung ausgebildet ist.

10. Vorrichtung nach Anspruch 9, dadurch gekennzeichnet, daß das Mittel aus wenigstens einem der Schlitze (8) und einem am Spreizteil (15) angebrachten, radialen Steg (28) gebildet ist.

11. Vorrichtung nach Anspruch 9, dadurch gekennzeichnet, daß das Mittel aus wenigstens einem der Schlitze (58) und einem der Ansätze (67) gebildet ist.

12. Vorrichtung nach Anspruch 10 oder 11, dadurch gekennzeichnet, daß der Schlitz (8, 58) am Hinterende geschlossen oder zumindest eines der Segmente (6, 56) am Hinterende mit einer Umbiegung versehen ist.

13. Vorrichtung nach einem der Ansprüche 1 bis 12, dadurch gekennzeichnet, daß das spreizbare Teil (5, 55) aus zwei oder mehr voneinander getrennten Schalen gebildet ist.

14. Vorrichtung nach einem der Ansprüche 1 bis 13, dadurch gekennzeichnet, daß das spreizbare Teil (5) aus wenigstens zwei Segmenten (6) besteht, die durch wenigstens einen achsparallelen Schlitz (8) getrennt sind und gemeinsam die konische innere Mantelfläche (12) bilden, und daß das Spreizteil (15, 40) eine mit der inneren Mantelfläche (12) zusammenwirkende, äußere Spreiz- fläche (16) aufweist.

15. Vorrichtung nach einem der Ansprüche 1 bis 13, dadurch gekennzeichnet, daß das spreizbare Teil (55) aus wenigstens zwei Segmenten (56) besteht, die durch wenigstens einen keilförmig ausgebildeten, von Seitenflächen (60) begrenzten Schlitz (58) getrennt sind und eine im wesentlichen zylindrische äußere Mantelfläche (61) bilden, und daß das Spreizteil (66) wenigstens einen in den Schlitz (58) einführbaren Ansatz (67) mit seitlichen, mit den Seitenflächen (60) zusammenwirkenden Spreizflächen (68) aufweist.

16. Vorrichtung nach Anspruch 14 oder 15, dadurch gekennzeichnet, daß die Segmente (6, 56) mit einem am Vorderende des spreizbaren Teils (5, 55) ausgebildeten Ring (9) zusammengehalten sind.

17. Vorrichtung nach Anspruch 16, dadurch gekennzeichnet, daß der Ring (9) als Zentrierstück für das Bauteil (20) ausgebildet ist.

18. Vorrichtung nach einem der Ansprüche 1 bis 17, dadurch gekennzeichnet, daß das spreizbare Teil (5, 55) aus Stahl besteht.

19. Vorrichtung nach einem der Ansprüche 1 bis 18, dadurch gekennzeichnet, daß die Segmente (5, 55) an ihren Vorderenden mittels verformbarer Teile (33) mit dem Ring (9) verbunden sind.

20. Vorrichtung nach Anspruch 19, dadurch gekennzeichnet, daß die verformbaren Teile (33) aus dünnen Verbindungsstegen oder Wandteilen bestehen.

## Claims

1. Device for fixing particularly a tubular structural member (20) comprising a receiving opening (19), to a wall or the like, consisting of a retaining portion (1, 51) comprising a hole (10, 63), an expandable portion (5, 55) designed for introduction into the receiving opening and comprising a passage, and a screw joint designed for expansion of the expandable portion and for connection of the retaining portion to the structural member, characterised in that the expandable portion (5, 55) comprises at least two segments (6, 56) which are separated by at least one slot (8, 58) extending in the longitudinal direction of the expandable portion (5, 55), and in that an expanding portion (15, 40, 66) is provided which can be at least partially introduced into the passage and which comprises at least one expanding surface (16, 68) which cooperates over a large area with a surface (12, 60) of the expandable portion (5, 55) adapted to it.

2. Device according to claim 1, characterised in that the retaining portion (1, 51) is provided with a hole (10, 63), and the screw joint comprises a threaded bolt (23, 39) extending into the hole (10, 63) and the passage and designed for radial bracing of the expandable portion (5, 55) in the receiving opening (19), and an element (24, 42) associated with the threaded bolt and allowing bracing.

3. Device according to claim 1 or 2, characterised in that in the assembled state the expandable portion (5, 55), the expanding portion (15, 40, 66) and the threaded bolt (23, 39) are arranged essentially on the front side (4, 54) and the element (10, 42) is arranged on the rear side (3, 53) of the retaining portion (1, 51).

4. Device according to any of claims 1 to 3, characterised in that the threaded bolt (23) can be screwed into an internal thread section (17, 70) of the expanding portion (15, 66), and the element (24) consists of a radial attachment rigidly attached to the threaded bolt (23).

5. Device according to claim 4, characterised in that the element (24) is constructed as a countersunk head.

6. Device according to any of claims 1 to 3, characterised in that the threaded bolt (39) is rigidly attached to the expanding portion (40), and the element (42) is a nut which is or can be screwed onto the threaded bolt (39).

7. Device according to any of claims 1 to 6, characterised in that the retaining portion (1, 51) and the expandable portion (5, 55) are rigidly connected to each other.

8. Device according to any of claims 1 to 5, characterised in that it comprises a means which prevents rotation of the expanding portion (15, 66) in the expandable portion (5, 55).

9. Device according to claim 8, characterised in that the means is constructed after the fashion of a keyed joint.

10. Device according to claim 9, characterised in that the means is formed from at least one of the slots (8) and a radial web (28) mounted on the expanding portion (15).

11. Device according to claim 9, characterised in that the means is formed from at least one of the slots (58) and one of the attachments (67).

12. Device according to claim 10 or 11, characterised in that the slot (8, 58) is closed at the rear end, or at least one of the segments (6, 56) is provided with a turned-back portion at the rear end.

13. Device according to any of claims 1 to 12, characterised in that the expandable portion (5, 55) is formed from two or more shells separate from each other.

14. Device according to any of claims 1 to 13, characterised in that the expandable portion (5) consists of at least two segments (6) which are separated by at least one slot (8) of parallel axis and together form the conical inner peripheral surface (12), and in that the expanding portion (15, 40) comprises an outer expanding surface (16) cooperating with the inner peripheral surface (12).

15. Device according to any of claims 1 to 13, characterised in that the expandable portion (55) consists of at least two segments (56) which are separated by at least one wedge-shaped slot (58) bounded by side faces (60) and form an essentially cylindrical outer peripheral surface (61), and in that the expanding portion (66) comprises at least one attachment (67) which can be introduced into the slot (58), with lateral expanding surfaces (68) cooperating with the side faces (60).

16. Device according to claim 14 or 15, characterised in that the segments (6, 56) are held together with a ring (9) formed at the front end of the expandable portion (5, 55).

17. Device according to claim 16, characterised in that the ring (9) is constructed as a centring piece for the structural member (20).

18. Device according to any of claims 1 to 17, characterised in that the expandable portion (5, 55) is made of steel.

19. Device according to any of claims 1 to 18, characterised in that the segments (5, 55) are connected to the ring (9) at their front ends by means of deformable portions (33).

20. Device according to claim 19, characterised in that the deformable portions (33) consist of thin connecting webs or wall portions.

## Revendications

1. Dispositif de fixation d'un composant (20), tubulaire notamment, doté d'une ouverture de réception (19), sur une paroi ou autres, composé d'un élément de fixation (1, 51) présentant un trou (10, 63), d'un élément extensible (5, 55), destiné à l'introduction dans l'ouverture de réception et présentant un passage, et d'un boulonnage, destiné à l'écartement de l'élément extensible et à l'assemblage de l'élément de fixation avec le composant, caractérisé en ce que l'élément extensible (5, 55) présente au moins deux segments (6, 56), séparés par une fente (8, 58), au moins, prévue dans le sens longitudinal de l'élément extensible (5, 55), et en ce qu'un élément d'écartement (15, 40, 66) est prévu, cet élément pouvant être introduit, en partie du moins, dans le passage, et présentant une surface d'écartement (16, 68), au moins, qui concourt sur une grande portée avec une surface (12, 60), qui lui est adaptée, de l'élément extensible (5, 55).

2. Dispositif suivant la revendication 1, caractérisé en ce que l'élément de fixation (1, 51) est muni d'un trou (10, 63), et en ce que le boulonnage présente un boulon fileté (23, 39), destiné au serrage radial de l'élément extensible (5, 55) dans l'ouverture de réception (19), et pénétrant dans le trou (10, 63) et dans le passage, ainsi qu'un élément (24, 42), associé au boulon fileté et permettant le serrage.

3. Dispositif suivant l'une des revendications 1 et 2, caractérisé en ce que, à l'état de montage, l'élément extensible (5, 55), l'élément d'écartement (15, 40, 66), et le boulon fileté (23, 39), sont essentiellement disposés sur la face avant (4, 54), et l'élément (10, 42) sur la face arrière (3, 53) de l'élément de fixation (1, 51).

4. Dispositif suivant l'une quelconque des revendications 1 à 3, caractérisé en ce que le boulon fileté (23) peut être fixé dans une section taraudée (17, 70) de l'élément d'écartement (15, 66), et en ce que l'élément (24) se compose d'un embout radial, fixé rigidement sur le boulon fileté (23).

5. Dispositif suivant la revendication 4, caractérisé en ce que l'élément (24) est réalisé sous forme de tête fraisée.

6. Dispositif suivant l'une quelconque des revendications 1 à 3, caractérisé en ce que le boulon fileté (39) est fixé rigidement sur l'élément d'écartement (40), et en ce que l'élément (42) est un écrou, qui peut être vissé, ou est vissé, sur le boulon fileté (39).

7. Dispositif suivant l'une quelconque des revendications 1 à 6, caractérisé par un assemblage fixe de l'élément de fixation (1, 51) et de l'élément extensible (5, 55).

8. Dispositif suivant l'une quelconque des revendications 1 à 5, caractérisé en ce qu'il présente un moyen, s'opposant à une rotation de l'élément d'écartement (15, 66) dans l'élément extensible (5, 55).

9. Dispositif suivant la revendication 8, caractérisé en ce que le moyen est réalisé à la manière d'un assemblage à rainure et languette.

10. Dispositif suivant la revendication 9, caractérisé en ce que le moyen est au moins formé par l'une des fentes (8), et par un profil radial (28), prévu sur l'élément d'écartement (15).

11. Dispositif suivant la revendication 9, caractérisé en ce que le moyen est au moins formé par l'une des fentes (58) et par l'un des embouts (67).

12. Dispositif suivant l'une des revendications 10 et 11, caractérisé en ce que la fente (8, 58) est fermée sur l'extrémité arrière, ou en ce que l'un des segments (6, 56), du moins, est muni d'un cintrage sur l'extrémité arrière.

13. Dispositif suivant l'une quelconque des revendications 1 à 12, caractérisé en ce que l'élément extensible (5, 55) se compose de deux ou de plusieurs coques, séparées les unes des autres.

14. Dispositif suivant l'une quelconque des revendications 1 à 13, caractérisé en ce que l'élément extensible (5) se compose de deux segments (6), au moins, séparés par une fente (8) parallèle à l'axe, au moins, et formant conjointement la surface d'enveloppe intérieure (12) conique, et en ce que l'élément d'écartement (15, 40) présente une surface d'écartement externe (16), concourant avec la surface d'enveloppe intérieure (12).

15. Dispositif suivant l'une quelconque des revendications 1 à 13, caractérisé en ce que l'élément extensible (55) se compose de deux segments (56), au moins, séparés par une fente (58), au moins, cunéiforme et limitée par des surfaces latérales (60), et qui forment une surface d'enveloppe externe (61) essentiellement cylindrique, et en ce que l'élément d'écartement (66) présente un embout (67), au moins, pouvant être introduit dans la fente (58), avec des surfaces d'écartement latérales (68), qui concourent avec les surfaces latérales (60).

16. Dispositif suivant l'une des revendications 14 et 15, caractérisé en ce que les segments (6, 56) sont maintenus par une bague (9), réalisée sur l'extrémité avant de l'élément extensible (5, 55).

17. Dispositif suivant la revendication 16, caractérisé en ce que la bague (9) est réalisée sous forme de pièce de centrage pour le composant (20).

18. Dispositif suivant l'une quelconque des revendications 1 à 17, caractérisé en ce que l'élément extensible (5, 55) est en acier.

19. Dispositif suivant l'une quelconque des revendications 1 à 18, caractérisé en ce que les segments (5, 55) sont assemblés avec la bague (9), sur leurs extrémités avant, au moyen d'éléments déformables (33).

20. Dispositif suivant la revendication 19, caractérisé en ce que les éléments déformables (33) se composent de minces profils de jonction ou d'éléments de parois.
